# EUROPÄISCHE PATENTANMELDUNG

(11) **EP 4 001 635 A1**
(43) Veröffentlichungstag der Anmeldung: **25.05.2022**
(21) Anmeldenummer: 21208212.7
(22) Anmeldetag: 15.11.2021
(51) Int. Cl.: F03D 1/06

(54) **ROTORNABE FÜR EINE WINDENERGIEANLAGE SOWIE BETREFFENDE ROTORANORDNUNG UND WINDENERGIEANLAGE**

(30) Priorität: 13.11.2020 DE 102020130066
(71) Anmelder: Wobben Properties GmbH, 26607 Aurich (DE)
(72) Erfinder: Schüller, Jörg, 28213 Bremen (DE); Sartorius, Florian, 26789 Leer (DE); Gudewer, Wilko, 26506 Norden (DE)
(74) Vertreter: Eisenführ Speiser

(57) **Zusammenfassung**

Die vorliegende Erfindung betrifft eine Rotornabe (114) für eine Windenergieanlage (100), mit wenigstens zwei Flanschabschnitten (116) zur Aufnahme jeweils eines Rotorblatts (108), wobei die Rotornabe (114) ein Gehäuse (118) mit einer Wandung (120) aufweist, welche durch die Flanschabschnitte (116) unterbrochen ist, wobei das Gehäuse (118) einen Wandbereich (122) zwischen zwei benachbarten Flanschabschnitten (116) aufweist. Die Erfindung betrifft ferner eine Rotoranordnung (106) für eine Windenergieanlage (100) und eine Windenergieanlage (100).

Erfindungsgemäß wird vorgeschlagen, dass in dem Wandbereich (122) ein Flächenabschnitt (124) mit zylinderförmiger Krümmung (126) ausgebildet ist.

## Beschreibung

Die Erfindung betrifft eine Rotornabe für eine Windenergieanlage mit wenigstens zwei Flanschabschnitten zur Aufnahme jeweils eines Rotorblatts, wobei die Rotornabe ein Gehäuse mit einer Wandung aufweist, welche durch die Flanschabschnitte unterbrochen ist, wobei das Gehäuse einen Wandbereich zwischen zwei benachbarten Flanschabschnitten aufweist.

In der prioritätsbegründenden deutschen Anmeldung hat das Deutsche Patent- und Markenamt die folgenden Dokumente recherchiert: US 7 614 850 B2, US 2013/0202448 A1, US 2015/0337796 A1, EP 3 492 734 B1, EP 2 947 316 A1, EP 3 453 871 A1

Eine Rotornabe der eingangs genannten Art ist beispielsweise von Windenergieanlagen bekannt. Betreffende Windenergieanlagen weisen einen Turm, eine Gondel, einen Generator und eine mit dem Generator verbundene Rotornabe auf. Die Rotornabe ist mit mehreren Rotorblättern verbunden, wobei jeweils ein Rotorblatt mittels eines Blattlagers an einem Flanschabschnitt der Rotornabe angeordnet ist.

Derartige Blattlager weisen einen Lageraußenring auf, der mittels einer Schraubverbindung mit dem Flanschabschnitt der Rotornabe verbunden ist, und einen Lagerinnenring, welcher mit dem betreffenden Rotorblatt verbunden ist. Darüber hinaus sind Blattlager bekannt, bei denen ein Lageraußenring mit einem betreffenden Rotorblatt verbunden ist und der Lagerinnenring mit der Rotornabe. Aus dem Stand der Technik vorbekannte Rotornaben weisen zumeist eine Kugelgeometrie auf, die durch die Flanschabschnitte unterbrochen ist.

Durch den Hebelarm zwischen den Schraubverbindungen des Lageraußenrings und der kugelförmigen Rotornabenoberfläche bzw. zwischen Lageraußenring und Lagerinnenring entstehen beim Betrieb der Windenergieanlage sogenannte Krempelmomente, welche ein Aufbiegen des Flanschabschnittes sowie umlaufende Ringspannungen im Lageraußenring des Blattlagers zur Folge haben. Zur Vermeidung von Ermüdungsrissen an den Bohrungen des Lageraußenrings ist aus dem Stand der Technik bekannt, die Wandstärken der Rotornabe und/oder eines sogenannten Schotts, welches im Inneren der Flanschabschnitte angeordnet ist, zu verstärken. Diese Verstärkungen werden auch als Aufdickungen bezeichnet.

Das Schott ist in bevorzugten Ausführungsformen beispielsweise angegossen oder mittels Schraubverbindungen an der Rotornabe angebracht.

Wenngleich die beschriebene Lösung auf zufriedenstellende Art und Weise das Auftreten von Ermüdungsrissen an den Bohrungen des Lageraußenrings verhindert, erhöht eine derartige Konstruktion die Masse der Nabe. Die betreffende Massenerhöhung erschwert insgesamt die Montage der Nabe, erhöht die Materialkosten und kann sich in Bezug auf Trägheitsmomente als nachteilig auswirken.

Vor diesem Hintergrund lag der Erfindung die Aufgabe zugrunde, eine Rotornabe der eingangs bezeichneten Art dahingehend weiterzubilden, dass die im Stand der Technik aufgefundenen Nachteile möglichst weitgehend behoben werden. Insbesondere war eine Rotornabe für eine Windenergieanlage anzugeben, bei welcher das Auftreten von Ermüdungsrissen an den Bohrungen des Lageraußenrings zielführend verhindert und gleichzeitig die Masse der Rotornabe reduziert wird.

Erfindungsgemäß wird die Aufgabe bei einer Rotornabe der eingangs genannten Art dadurch gelöst, dass in dem Wandbereich ein Flächenabschnitt mit zylinderförmiger Krümmung ausgebildet ist (Anspruch 1).

Die Erfindung basiert auf dem Ansatz, dass durch die Einführung eines zylinderförmig gekrümmten Abschnitts zwischen den benachbarten Flanschabschnitten eine Formabweichung relativ zu den typischerweise (teil-)kugelförmigen Nabengehäusen aus dem Stand der Technik erzeugt wird. Unter einem zylinderförmig gekrümmten Abschnitt wird ein Flächenabschnitt verstanden, bei welchem alle Punkte auf der Oberfläche des Abschnittes von einer gedachten Zylinderachse denselben Abstand aufweisen, also auf einer Zylindermantelfläche liegen. Dabei ist nicht erforderlich, dass der zylinderförmig gekrümmte Abschnitt einen vollständig umlaufenden Zylinder ausbildet.

Im Stand der Technik waren die Gehäuse - wie weiter oben dargestellt - soweit möglich einer Kugelgeometrie angenähert, um eine vermeintlich optimale Lastverteilung zu erreichen. In den Bereichen des Gehäuses, in denen nun erfindungsgemäß abschnittsweise eine zylinderförmige Gehäusestruktur vorliegt, entsteht relativ zu der aus dem Stand der Technik bekannten idealen Kugelgeometrie eine Abflachung derart, dass eine Reduzierung des Hebelarms zwischen den Befestigungsschrauben des Lageraußenrings und der Gehäuseoberfläche der Rotornabe bewirkt wird (wobei der Hebelarm senkrecht zur Mittenachse des Lageraußenrings betrachtet wird). Auf diese Weise werden die umlaufenden Ringspannungen in dem Lageraußenring reduziert. Der Vorteil hieran ist, dass die Wandung der Rotornabe und die Schotts aufdickungsfrei ausgebildet werden können. Hierdurch kann die Gesamtmasse der Rotornabe reduziert werden.

Gemäß einer bevorzugten Ausführungsform weist die Rotornabe drei Flanschabschnitte auf, wobei zwischen jeweils zwei benachbarten Flanschabschnitten jeweils ein Flächenabschnitt mit zylinderförmiger Krümmung ausgebildet ist. Auf diese Weise lassen sich die Hebelarme zwischen den Lagerbefestigungsschrauben der Lageraußenringe und der Nabenoberfläche bei den sämtlichen Blattanschlüssen der Rotornabe reduzieren und die Gesamtmasse der Rotornabe senken.

Weiterhin bevorzugt ist der Flächenabschnitt mit zylinderförmiger Krümmung in jenem Bereich zwischen zwei benachbarten Flanschabschnitten angeordnet, an welchem Umfänge der benachbarten Flanschabschnitte den geringsten Abstand zueinander aufweisen. Vorzugsweise nimmt der abgeflachte Wandbereich den größten Flächenbereich bezogen auf eine Gesamtfläche zwischen zwei benachbarten Flanschabschnitten ein. Die Ausbildung der abgeflachten Wandbereiche in jenem Bereich zwischen zwei benachbarten Flanschabschnitten, an welchem die Umfänge benachbarter Flanschabschnitte den geringsten Abstand zueinander aufweisen, hat sich als vorteilhaft erwiesen, zur besonders zielführenden Reduzierung des Hebelarms zwischen den Lagerbefestigungsschrauben des Lageraußenrings und der Oberfläche der Rotornabe.

Gemäß eines zweiten Aspekts der Erfindung, der zugleich eine vorteilhafte Weiterbildung des ersten Aspektes ist, wird erfindungsgemäß vorgeschlagen, dass das Gehäuse der Rotornabe benachbart zu dem Wandbereich einen oder mehrere ebene Wandbereiche aufweist, welche vorzugsweise aus wenigstens einer polygonalen, insbesondere dreieckigen Grundfläche ausgebildet sind.

Unter einem ebenen Wandbereich wird vorliegend ein solcher Wandbereich verstanden, der keine technisch beabsichtigten Krümmungen aufweist, d. h. keine beabsichtigten Erhebungen und Senkungen, die über fertigungs- oder handhabungsbedingte allgemeine Oberflächenunebenheiten oder Fertigungstoleranzen hinausgehen.

Im Stand der Technik waren die Gehäuse - wie weiter oben dargestellt - soweit möglich einer Kugelgeometrie angenähert. In den Bereichen des Gehäuses, in denen nun erfindungsgemäß ebene Wandbereiche vorliegen, entsteht relativ zu der aus dem Stand der Technik bekannten idealen Kugelgeometrie eine Abflachung im Sinne einer Ebene, die vorzugsweise durch wenigstens eine polygonale, insbesondere dreieckige, Grundfläche ausgebildet ist. Derartige ebene Wandbereiche haben sich als vorteilhaft erwiesen zur Optimierung der Kraft- und Momentenverläufe innerhalb der Rotornabe.

Die Vorteile und bevorzugten Ausführungsformen des zweiten Aspekts sind zugleich Vorteile und bevorzugte Ausführungsformen des ersten Aspekts und umgekehrt, sodass zur Vermeidung von Wiederholungen auch auf die obigen Ausführungen zum ersten Aspekt verwiesen wird. Die Erfindung beider Aspekte wird ferner dadurch weitergebildet, dass das Gehäuse der Rotornabe benachbart zu den ebenen Wandbereichen Freiformwandbereiche aufweist. Auch diese Freiformwandbereiche haben sich als vorteilhaft erwiesen in Bezug auf die Optimierung der Kraft- und Momentenverläufe innerhalb der Rotornabe.

Gemäß einer bevorzugten Ausführungsform sind die Freiformwandbereiche gewölbt ausgebildet. Weiterhin bevorzugt gehen benachbarte Wandbereiche knickfrei ineinander über. Auf diese Weise wird nicht nur der Kraft- und Momentenfluss innerhalb der Rotornabe optimiert, sondern auch deren aerodynamische Eigenschaften, das heißt insbesondere deren Strömungswiderstand reduziert.

Vorzugsweise sind die Flächenabschnitte mit zylinderförmiger Krümmung zwischen sämtlichen Paarungen aus zwei Flanschabschnitten ausgebildet. Auf diese Weise kann bei sämtlichen Blattlagern der Hebelarm zwischen den Lagerbefestigungsschrauben des Lageraußenrings und der Rotornabenoberfläche reduziert werden und damit Ermüdungsrissen an den Bohrungen der Lagerbefestigungsschrauben vorgebeugt werden.

Gemäß eines dritten Aspekts der Erfindung bzw. gemäß einer vorteilhaften Weiterbildung der Erfindung gemäß des ersten Aspektes wird erfindungsgemäß vorgeschlagen, dass an wenigstens einem Flanschabschnitt, vorzugsweise an mehreren oder sämtlichen Flanschabschnitten, ein Kragen ausgebildet ist, welcher sich bezogen auf eine Drehachse der Rotornabe nach radial außen erstreckt, und wobei der Kragen dazu eingerichtet ist, die Steifigkeit des Kragens gegenüber Krempelmomenten zu erhöhen. Ein solcher Kragen kann alternativ oder zusätzlich zu den abgeflachten Wandbereichen eingesetzt werden, zur Erhöhung der Steifigkeit des Kragens gegenüber Krempelmomenten und zur Vermeidung von Ermüdungsrissen an den Bohrungen zur Aufnahme der Lagerbefestigungsschrauben an dem Lageraußenring. Mittels des Kragens wird erreicht, dass umlaufende Ringspannungen im Lageraußenring derart in die Rotornabe eingeleitet werden, dass das Auftreten von Ermüdungsrissen an den Bohrungen zur Aufnahme der Lagerbefestigungsschrauben verhindert wird.

Die Vorteile und bevorzugten Ausführungsformen des dritten Aspekts sind zugleich Vorteile und bevorzugte Ausführungsformen des ersten Aspekts und/oder des zweiten Aspekts und umgekehrt, sodass zur Vermeidung von Wiederholungen auch auf die obigen Ausführungen zum ersten und/oder zweiten Aspekt verwiesen wird.

Gemäß einer bevorzugten Weiterbildung ist der Kragen mittels einer Schraubverbindung an der Rotornabe befestigt. Das Vorsehen einer solchen Schraubverbindung ermöglicht grundsätzlich auch das Nachrüsten eines betreffenden Kragens an bereits bestehenden Rotornaben und hat sich im Übrigen als besonders geeignet erwiesen, den betreffenden Kragen benutzerfreundlich zu montieren.

Gemäß einer alternativen Ausführungsform ist der Kragen einstückig mit der Rotornabe ausgebildet, insbesondere an diese angegossen. Hierbei wird das Vorsehen eines Kragens unmittelbar bei der Neufertigung einer Rotornabe berücksichtigt, zusätzlicher Montageaufwand durch das Anschrauben eines Kragens verhindert, und das Einbringen zusätzlicher Bohrungen und Schraubverbindungen, welche die Integrität der Rotornabe schwächen können, vermieden.

Die Erfindung ist vorstehend unter Bezugnahme auf eine Rotornabe beschrieben worden. In einem weiteren Aspekt betrifft die Erfindung eine Rotoranordnung für eine Windenergieanlage, mit einer Rotornabe und Rotorblättern, die an der Rotornabe angeordnet sind, wobei die Rotorblätter in ihrem Anstellwinkel verstellbar sind und mittels jeweils eines Blattlagers an Flanschabschnitten der Rotornabe aufgenommen sind.

Die Erfindung löst die eingangs bezeichnete Aufgabe in Bezug auf die Rotoranordnung, indem die Rotornabe nach einem der vorstehenden Ausführungsbeispiele ausgebildet ist. Die Rotoranordnung macht sich die gleichen Vorteile und bevorzugten Ausführungsformen zunutze wie die erfindungsgemäße Rotornabe. Diesbezüglich wird auf die obigen Ausführungen verwiesen und deren Inhalt hier mit einbezogen.

In einem weiteren Aspekt betrifft die Erfindung eine Windenergieanlage mit einem Turm, auf dem eine Gondel mittels einer Drehverbindung gelagert ist, einem in der Gondel aufgenommenen Generator und eine mit dem Generator verbundenen Rotoranordnung zum Antreiben des Generators.

Die Erfindung löst die eingangs bezeichnete Aufgabe in Bezug auf die Windenergieanlage, indem die Rotoranordnung nach dem vorstehenden Ausführungsbeispiel ausgebildet ist. Die Windenergieanlage macht sich die gleichen Vorteile und bevorzugten Ausführungsformen zunutze wie die erfindungsgemäße Rotoranordnung und die erfindungsgemäße Rotornabe. Diesbezüglich wird auf die obigen Ausführungen verwiesen und deren Inhalt hier mit einbezogen.

Die Erfindung wird im Folgenden unter Bezugnahme auf die beigefügten Figuren anhand bevorzugter Ausführungsbeispiele beschrieben. Hierbei zeigen:
- Fig. 1 eine Windenergieanlage gemäß einem bevorzugten Ausführungsbeispiel;
- Fig. 2 eine erfindungsgemäße Rotornabe für eine Windenergieanlage in einer perspektivischen Ansicht;
- Fig. 3 die erfindungsgemäße Rotornabe gemäß Fig. 2 in einer alternativen perspektivischen Ansicht;
- Fig. 4 die erfindungsgemäße Rotornabe gemäß den Figuren 2 und 3 in einer perspektivischen Teilschnittansicht;
- Fig. 5 die erfindungsgemäße Rotornabe gemäß den Figuren 2 bis 4 und ein an der Rotornabe befestigtes Blattlager in einer Schnittansicht;
- Fig. 6 ein alternatives Ausführungsbeispiel einer erfindungsgemäßen Rotornabe in einer Schnittansicht.

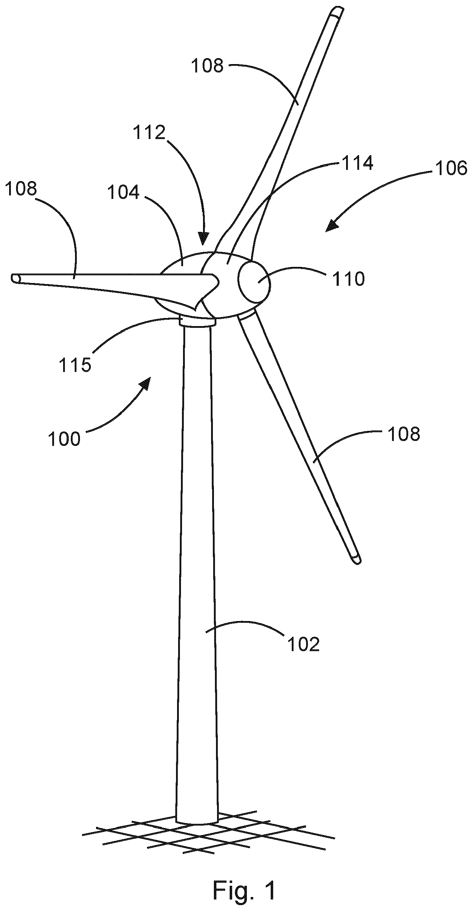

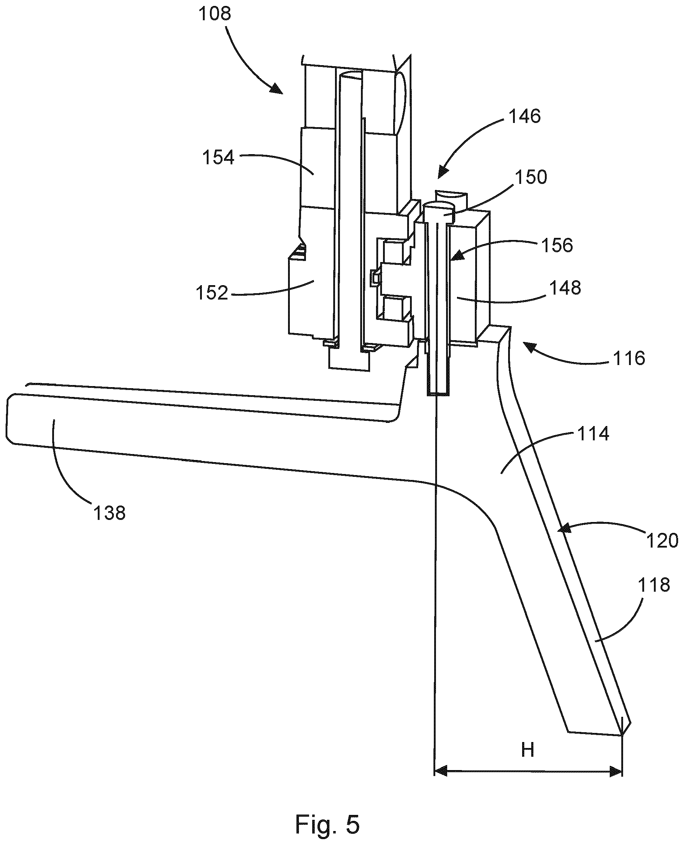

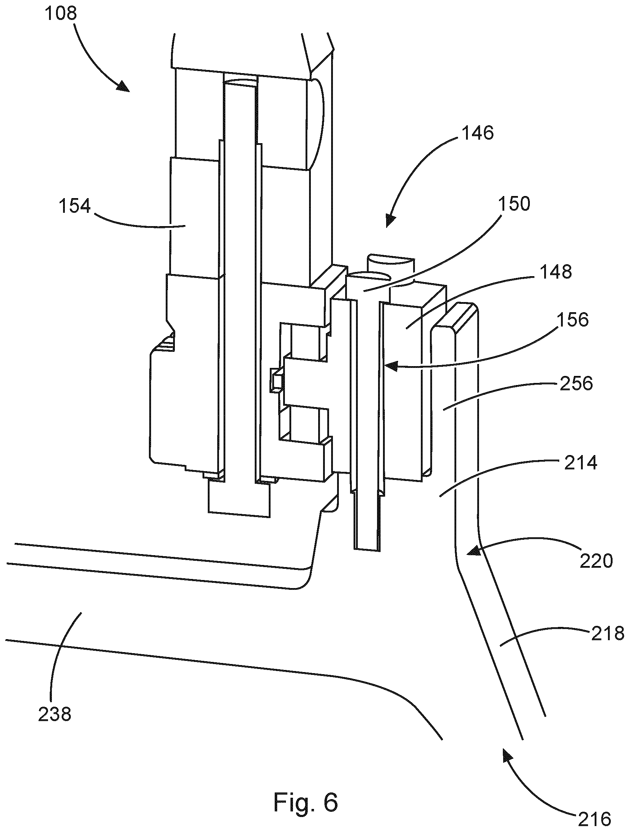

Fig. 1 zeigt eine Windenergieanlage 100 mit einem Turm 102, auf dem eine Gondel 104 mittels einer Drehverbindung 115 gelagert ist. In der Gondel 104 ist ein Generator 112 (in der Figur lediglich schematisch angedeutet) aufgenommen. Mit dem Generator 112 ist eine Rotoranordnung 106 zum Antreiben des Generators 112 drehfest verbunden. Die Rotoranordnung 106 weist eine Rotornabe 114 und Rotorblätter 108 auf. Die Rotorblätter 108 sind in ihrem Anstellwinkel verstellbar und mittels jeweils eines Blattlagers 146 (vgl. Figuren 5 und 6, hier nicht gezeigt) an der Rotornabe 114 aufgenommen. An der Rotornabe 114 ist auf der dem Generator 112 abgewandten Seite ein Spinner 110 angeordnet. Die Rotoranordnung 106 treibt den Generator 112 zur Erzeugung von elektrischem Strom an.

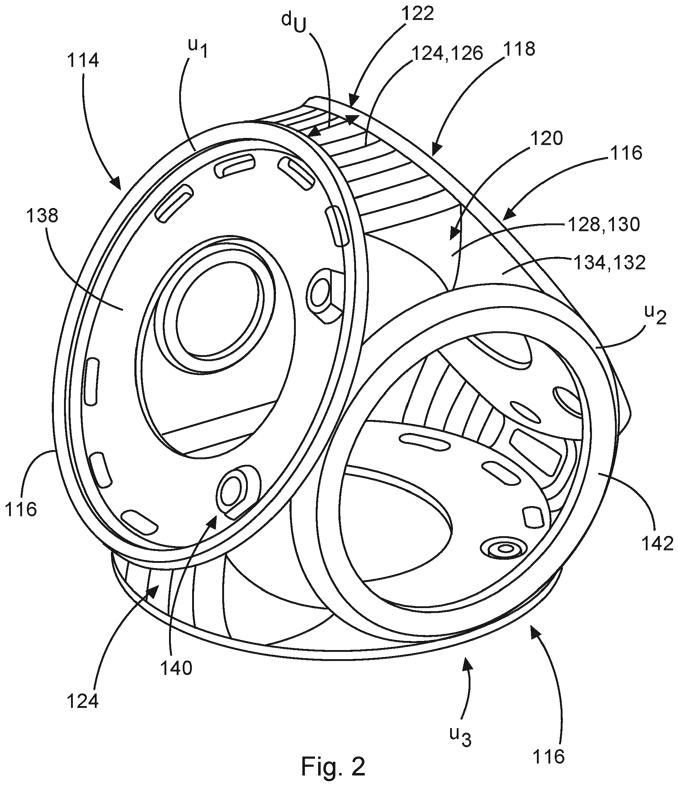

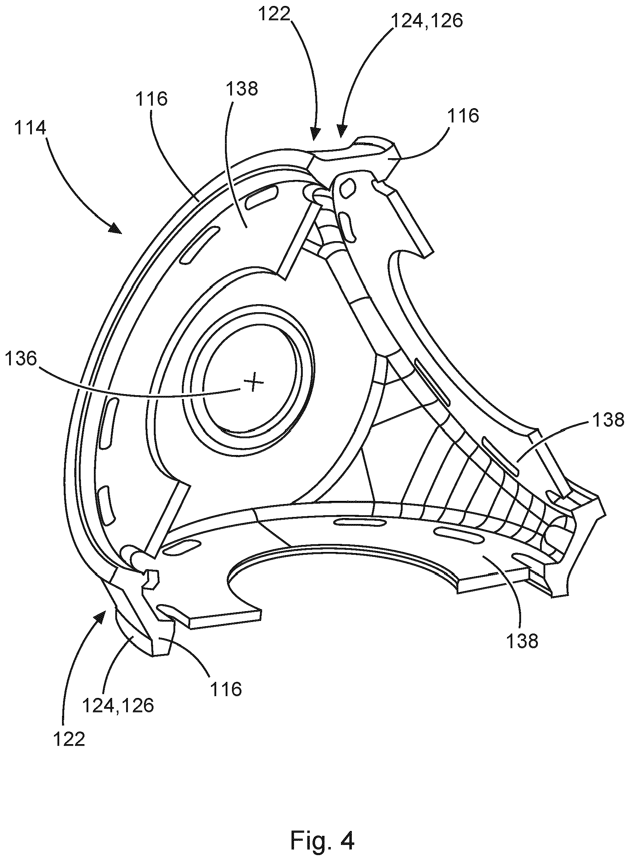

Die erfindungsgemäße Rotornabe 114 ist in den Fig. 2-5 dargestellt und wird zunächst unter Bezugnahme auf Fig. 2 beschrieben. Die Rotornabe 114 weist ein Gehäuse 118 mit einer Wandung 120 auf. Die Wandung 120 ist durch Flanschabschnitte 116 unterbrochen. Das Gehäuse 118 weist einen Wandbereich 122 zwischen zwei benachbarten Flanschabschnitten 116 auf. In dem Wandbereich 122 ist ein Flächenabschnitt 124 mit zylinderförmiger Krümmung 126 ausgebildet. Die Rotornabe 114 weist insgesamt drei Flanschabschnitte 116 auf, wobei zwischen jeweils zwei benachbarten Flanschabschnitten 116 jeweils ein Flächenabschnitt 124 mit zylinderförmiger Krümmung 126 ausgebildet ist. In dem in der Fig. 2 gezeigten Ausführungsbeispiel ist ein solcher Flächenabschnitt 124 mit zylinderförmiger Krümmung 126 zwischen den sämtlichen Paarungen aus zwei Flanschabschnitten 116 ausgebildet.

Der Flächenabschnitt 124 mit zylinderförmiger Krümmung 126 ist in jenem Bereich zwischen zwei benachbarten Flanschabschnitten 116 angeordnet, an welchem Umfänge u₁, u₂, u₃ der benachbarten Flanschabschnitte 116 den geringsten Abstand du zueinander aufweisen. Das Gehäuse 118 der Rotornabe 114 weist benachbart zu dem Wandbereich 122 ebene Wandbereiche 128 auf. Die ebenen Wandbereiche 128 sind aus wenigstens einer dreieckigen Grundfläche 130 ausgebildet. Das Gehäuse 118 der Rotornabe 114 weist ferner benachbart zu den ebenen Wandbereichen 128 Freiformwandbereiche 132 auf. Die Freiformwandbereiche 132 sind gewölbt 134 ausgebildet. Benachbarte Wandbereiche 122, 128, 130 gehen knickfrei ineinander über.

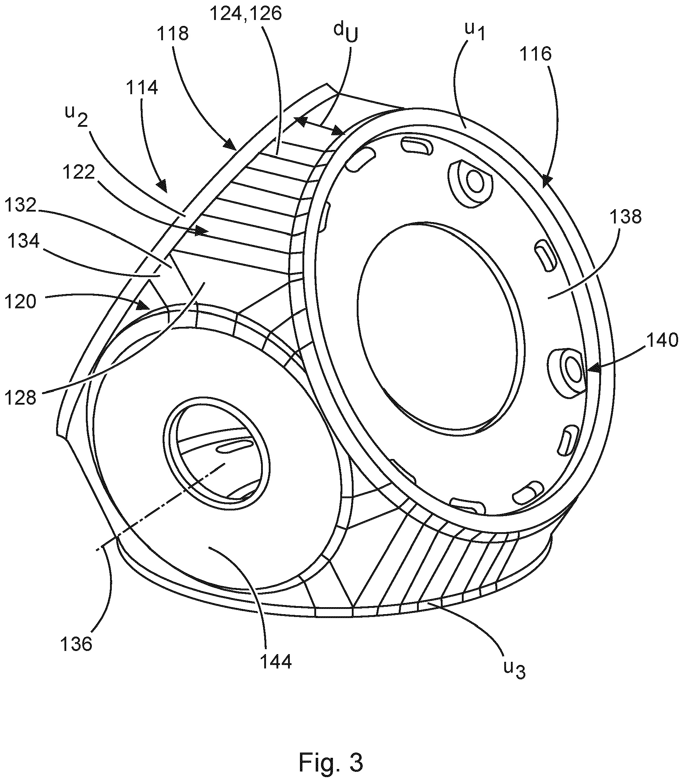

Wie insbesondere Fig. 2 zu entnehmen ist, weist die Rotornabe 114 einen Generatoranschlussflansch 142 zum Anschluss an einen Generator auf. Innerhalb der Flanschabschnitte 116 sind ferner Schotts 138 ausgebildet, welche die Rotornabe 114 insbesondere strukturell verstärken und eine Aufnahme für Blattanstellwinkelaktuatoren 140 (nicht gezeigt) bereitstellen. Wie unter Bezugnahme auf Fig. 3 erkennbar ist, weist die Rotornabe 114 eine Drehachse 136 auf, um welche die Rotornabe 114 im Betrieb an der Windenergieanlage 100 rotiert. In einem dem Generatorflansch 142 gegenüberliegenden Bereich der Rotornabe 114 ist ferner ein Spinneranschlussflansch 144 angeordnet, welcher dazu eingerichtet ist, den Spinner 110 aufzunehmen.

Fig. 5 zeigt die Rotornabe 114 mit einem an dem Flanschabschnitt 116 aufgenommenen Blattlager 146, mittels welchem ein Rotorblatt 108 an der Rotornabe 114 angeordnet ist. Die Rotornabe 114 weist das Schott 138 auf sowie das Gehäuse 118 mit der Wandung 120. An dem Flanschabschnitt 116 ist mittels Lagerbefestigungsschrauben 150 ein Lageraußenring 148 angeordnet. Zur Aufnahme der Lagerbefestigungsschrauben 150 weist der Lageraußenring 148 Lagerbohrungen 156 auf. Der Lageraußenring 148 ist mit einem Lagerinnenring 152 gekoppelt, der über ein Befestigungsmittel mit einem Blattflansch 154 verbunden ist. Über den Blattflansch 154 wird das Rotorblatt 108 mit dem Lagerinnenring 152 verbunden.

Im Betrieb kommt es über ein Aufbiegen des Flanschabschnittes 116 der Rotornabe 114 zu hohen umlaufenden Ringspannungen im Lageraußenring 148 des Blattlagers 146. Dabei ist insbesondere die Lagerbohrung 156 den betreffenden Ringspannungen ausgesetzt, womit die Lagerbohrungen 156 anfällig sind für die Ausbildung von Ermüdungsrissen. Durch die Abflachung der Rotornabe 114 gegenüber einer idealen Kugelgeometrie, wie aus dem Stand der Technik bekannt, wird vorliegend der Hebelarm H zwischen der Oberfläche des Gehäuses 118 der Rotornabe 114 und der Lagerbohrung 156 des Lageraußenrings 148 bzw. den entsprechenden Lagerbefestigungsschrauben 150 reduziert, womit das Auftreten von Ermüdungsrissen im Bereich der Lagerbohrungen 156 des Lageraußenrings 148 vermieden wird.

Fig. 6 zeigt ein alternatives Ausführungsbeispiel einer Rotornabe 214. Die Rotornabe 214 weist einen Schott 238 sowie ein Gehäuse 218 mit einer Wandung 220 auf. Die Rotornabe 214 weist ferner einen Flanschabschnitt 216 auf, an dem ein Kragen 256 angeordnet ist. Der Kragen 256 steht in der vorliegenden Fig. 6 in Anlage mit dem Lageraußenring 148 des Blattlagers 146, muss dies aber nicht zwangsläufig tun. Wie beim Lageraußenring 148 entstehen durch Krempelmomente umlaufende Ringspannungen in dem Kragen 256. Die umlaufenden Ringspannungen in dem Kragen 256 bewirken eine Verformungsbehinderung des Flanschabschnittes 216, welche zu einer Verminderung der Ringspannungen im Lageraußenring 148 führt. Das Auftreten von Ermüdungsrissen an den Lagerbohrungen 156 wird so vermieden.

### Liste der verwendeten Bezuqszeichen

- 100: Windenergieanlage
- 102: Turm
- 104: Gondel
- 106: Rotoranordnung
- 108: Rotorblatt
- 110: Spinner
- 112: Generator
- 114: Rotornabe
- 115: Drehverbindung
- 116: Flanschabschnitt
- 118: Gehäuse
- 120: Wandung
- 122: Wandbereich zwischen zwei benachbarten Flanschabschnitten
- 124: Flächenabschnitt
- 126: zylinderförmige Krümmung
- 128: ebene Wandbereiche
- 130: dreieckige Grundflächen
- 132: Freiformwandbereich
- 134: Wölbung des Freiformwandbereiches
- 136: Drehachse der Nabe
- 138: Schott
- 140: Aufnahme für Blattanstellwinkelaktuator
- 142: Generatoranschlussflansch
- 144: Spinneranschlussflansch
- 146: Blattlager
- 148: Lageraußenring
- 150: Lagerbefestigungsschrauben
- 152: Lagerinnenring
- 154: Blattflansch
- 156: Lagerbohrung des Lageraußenrings
- 214: Rotornabe
- 216: Flanschabschnitt
- 218: Gehäuse
- 220: Wandung
- 238: Schott
- 256: Kragen
- du: Abstand der Umfänge der Flanschabschnitte
- H: Hebelarm
- u₁, u₂, u₃: Umfänge der Flanschabschnitte

## Patentansprüche

1. Rotornabe (114) für eine Windenergieanlage (100), mit wenigstens zwei Flanschabschnitten (116) zur Aufnahme jeweils eines Rotorblatts (108),
wobei die Rotornabe (114) ein Gehäuse (118) mit einer Wandung (120) aufweist, welche durch die Flanschabschnitte (116) unterbrochen ist,
wobei das Gehäuse (118) einen Wandbereich (122) zwischen zwei benachbarten Flanschabschnitten (116) aufweist,
**dadurch gekennzeichnet, dass** in dem Wandbereich (122) ein Flächenabschnitt (124) mit zylinderförmiger Krümmung (126) ausgebildet ist.

2. Die Rotornabe (114) nach Anspruch 1,
**dadurch gekennzeichnet, dass** die Rotornabe (114) drei Flanschabschnitte (116) aufweist, wobei zwischen jeweils zwei benachbarten Flanschabschnitten (116) jeweils ein Flächenabschnitt (124) mit zylinderförmiger Krümmung (126) ausgebildet ist.

3. Die Rotornabe (114) nach Anspruch 1 oder 2,
**dadurch gekennzeichnet, dass** der Flächenabschnitt (124) mit zylinderförmiger Krümmung (126) in jenem Bereich zwischen zwei benachbarten Flanschabschnitten (116) angeordnet ist, an welchem Umfänge (u₁, u₂, u₃) der benachbarten Flanschabschnitte (116) den geringsten Abstand (du) zueinander aufweisen.

4. Die Rotornabe (114) nach dem Oberbegriff des Anspruchs 1 oder nach einem der vorstehenden Ansprüche,
**dadurch gekennzeichnet, dass** das Gehäuse (118) der Rotornabe (114) benachbart zu dem Wandbereich (122) einen oder mehrere ebene Wandbereiche (128) aufweist, welche insbesondere aus wenigstens einer dreieckigen Grundfläche (130) ausgebildet sind.

5. Die Rotornabe (114) nach Anspruch 4,
**dadurch gekennzeichnet, dass** das Gehäuse (118) der Rotornabe (114) benachbart zu den ebenen Wandbereichen (128) Freiformwandbereiche (132) aufweist.

6. Die Rotornabe (114) nach Anspruch 5,
**dadurch gekennzeichnet, dass** die Freiformwandbereiche (132) gewölbt (134) ausgebildet sind.

7. Die Rotornabe (114) nach einem der vorstehenden Ansprüche,
**dadurch gekennzeichnet, dass** benachbarte Wandbereiche (122, 128, 130) knickfrei ineinander übergehen.

8. Die Rotornabe (114) nach einem der vorstehenden Ansprüche,
**dadurch gekennzeichnet, dass** die Flächenabschnitte (124) mit zylinderförmiger Krümmung (126) zwischen sämtlichen Paarungen aus zwei Flanschabschnitten (116) ausgebildet sind.

9. Die Rotornabe (214) nach dem Oberbegriff des Anspruchs 1 oder nach einem der vorstehenden Ansprüche,
**dadurch gekennzeichnet, dass** an wenigstens einem Flanschabschnitt (216), vorzugsweise an mehreren oder sämtlichen Flanschabschnitten (216), ein Kragen (256) ausgebildet ist, welcher sich bezogen auf eine Drehachse (136) der Rotornabe (214) nach radial außen erstreckt, und wobei der Kragen (256) dazu eingerichtet ist, die Steifigkeit des Kragens (256) gegenüber Krempelmomenten zu erhöhen.

10. Die Rotornabe (214) nach Anspruch 9,
**dadurch gekennzeichnet, dass** der Kragen (256) mittels einer Schraubverbindung an der Rotornabe (214) befestigt ist.

11. Die Rotornabe (214) nach Anspruch 9,
**dadurch gekennzeichnet, dass** der Kragen (256) einstückig mit der Rotornabe (214) ausgebildet ist, insbesondere an diese angegossen ist.

12. Rotoranordnung (106) für eine Windenergieanlage (100), mit einer Rotornabe (114, 214) und Rotorblättern (108), die an der Rotornabe (114, 214) angeordnet sind, wobei die Rotorblätter (108) in ihrem Anstellwinkel verstellbar sind und mittels jeweils eines Blattlagers (146) an Flanschabschnitten (116, 216) der Rotornabe (114, 214) aufgenommen sind, **dadurch gekennzeichnet, dass** die Rotornabe (114, 214) nach einem der vorstehenden Ansprüche ausgebildet ist.

13. Windenergieanlage (100), mit einem Turm (102), auf dem eine Gondel (104) mittels einer Drehverbindung (115) gelagert ist, einem in der Gondel (104) aufgenommenen Generator (112) und einer mit dem Generator (112) verbundenen Rotoranordnung (106) zum Antreiben des Generators (112), **dadurch gekennzeichnet, dass** die Rotoranordnung (106) nach Anspruch 12 ausgebildet ist.
